# EUROPEAN PATENT SPECIFICATION

(11) **EP 1 454 806 B1**
(45) Date of publication and mention of the grant of the patent: **24.01.2007**
(21) Application number: 04004321.8
(22) Date of filing: 26.02.2004
(51) Int. Cl.: B60R 22/44, B60R 22/46, B60R 21/01

(54) **Device for controlling a vehicle occupant restraint system**
Vorrichtung zur Steuerung von Rückhaltemitteln in einem Kraftfahrzeug
Dispositif de contrôle du système de retenue d'un occupant de véhicule

(30) Priority: 07.03.2003 DE 10310069
(43) Date of publication of application: 08.09.2004
(73) Proprietor: KEY SAFETY SYSTEMS, INC., Sterling Heights, MI 48314 (US)
(72) Inventor: Specht, Martin, 82340 Feldafing (DE); Heckmayr, Thomas, 86871 Rammingen (DE)
(74) Representative: Gislon, Gabriele

(56) References cited:
- DE-A- 10 141 240
- US-A- 5 718 451
- US-A1- 2002 011 123

## Description

The invention relates to a procedure and a device for controlling a vehicle occupant restraint system operating in dependence on the force acting on a seat belt.

US 5,996,421 A teaches the measurement of a pulling force acting upon a seat belt upon the insertion into a belt buckle of a buckle tongue connected to the seat belt. The measuring signal is combined with a weight force measuring signal for a weight force acting upon the vehicle seat, to determine the seat occupancy by a vehicle occupant or a child's seat. The inflation of the passenger airbag is adjusted in dependence on the result of this evaluation procedure.

DE 196 04 483 C1 teaches a restraint system for a motor vehicle in which in dependence on the body data of a vehicle occupant, his/her seating position and the course of the crash, a regulation of the force/path course in the load limiting device is carried out to adjust the restraint force imparted by the seat belt webbing on the body of the vehicle occupant. In this case a measurement of the force acting upon the belt webbing can be made.

WO 01/87676 teaches the measurement of the pulling force acting upon the belt webbing together with the weight force acting upon the vehicle seat with the help of a force measuring device foreseen in the region of the belt buckle fastening, in order to determine seat occupancy.

US 5 718 451, which corresponds to the preamble of claim 1, concerns a device for controlling an occupant restraint system of a vehicle which takes into account the occupant's position, the occupant's body profile, the crash type and severity, the force exerted on the seat belt and based on these parameters regulates the speed and amount of the seat belt releasing to provide maximum occupant energy absorption and, when appropriate, triggers the inflation of one or more airbags. Adjustment of the belt release is achieved by an electric motor coupled to the belt reel and controlled by the device.

DE 10141240 relates to a device for controlling the seat belt release which comprises a geared motor with an electric drive motor for coupling to the belt spool via a reduction gear. The reduction gear can be selectively connected to the belt spool via a controllable clutch.

US2002/0011123 discloses a sensor for seatbelt tension that makes use of a Villari (magnetostrictive) effect. A sensor housing is provided that encloses the Villari sensor and allows axial movement of a plunger; the sensor translates tensile forces into compressive forces acting on the Villari sensor. One single spring 50 is located between a plunger and the second end of the sensor rod to bias the sensor rod towards an end of the sensor housing.

There is provided in accordance with claim 1 and the claims depending therefrom a device for controlling a vehicle occupant restraint system operating in dependence on a force acting on a seat belt

The measured pulling force can be evaluated for setting the belt webbing contact force affecting the comfort of the restrained vehicle occupant in normal driving conditions. The measuring signal for the pulling force acting upon the seat belt can be evaluated for the setting of restraint functions in a pre-crash driving condition. The detection of a pre-crash driving condition can for instance be gained from evaluating sensor signals that register vehicle dynamics. By evaluating the sensor signals, a potential crash condition can be recognized, as is known for instance from DE 100 29 061 A1 and US 6,394,495 B1. The measuring signal for the pulling force acting upon the seat belt can in this case be evaluated together with the sensor signals that are used to detect the pre-crash driving condition. The alteration of the seat components, in particular of the seat back and the seat base, can be carried out by an electric drive, as is known for instance from DE 199 61 799 A1 In a crash the pulling force acting on the seat belt and measured during the crash can be evaluated for the setting of the amount of inflation gas introduced into an airbag. In addition, the measuring signal can be evaluated for the setting, during the crash, of the restraint force of the seat belt influenced by a load limiter.

According to the invention, the device for regulating or controlling a restraint system of a motor vehicle comprises a force measuring device, which is arranged in the path of the force between a fastening point of the seat belt to the vehicle and the seat belt; an evaluating device which is connected to the force measuring device and which evaluates measurement signals provided by the force measuring device; at least one electric drive which is connected to the evaluating device and which is controlled in dependence on the measurement signals, whereby the at least one electric drive can be connected to components of a belt retractor of the seat belt in dependence on the measurement signals.

Fig.1 is a block diagram of an evaluation circuit that is connected to a force-measuring device for the pulling force acting upon the seat belt.

Fig.2 shows a force-measuring device according to the present invention, with which the pulling force acting upon a seat belt is measured.

Fig.3 shows a further embodiment of the invention of a force-measuring device according to the present invention, with which the pulling force acting upon a seat belt is measured.

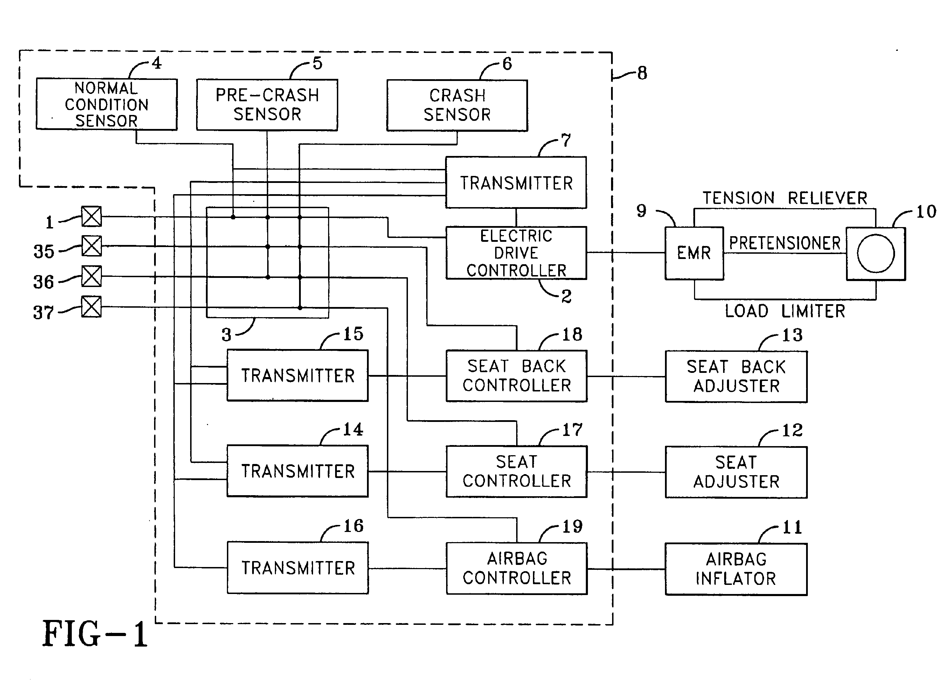

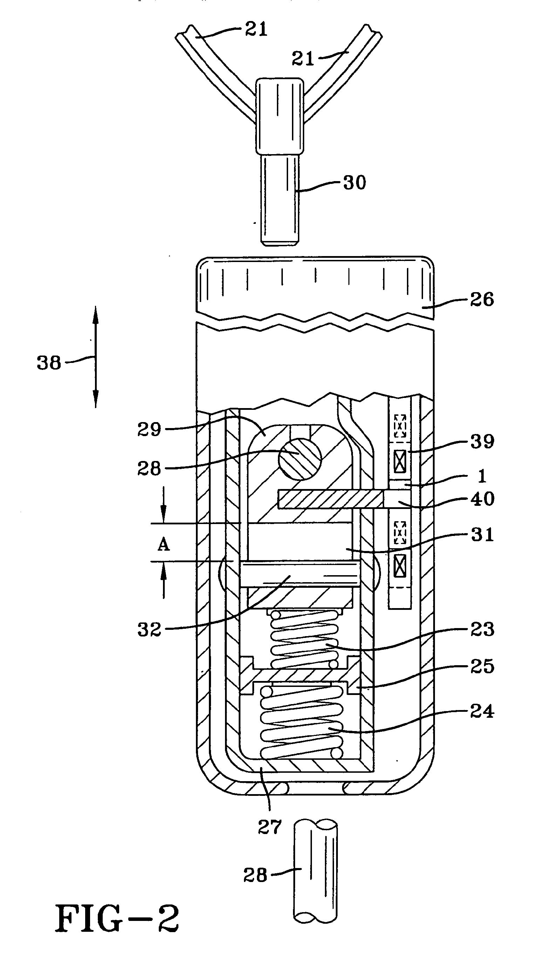

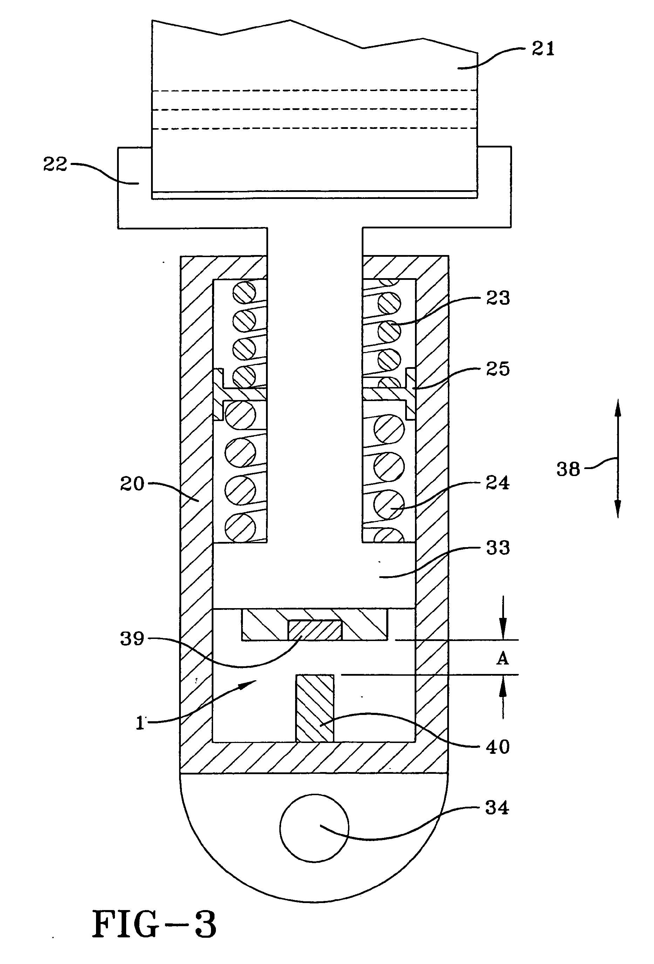

Fig.1 is a block diagram of an evaluating device 8, in which the pulling forces measured by a force measuring device 1 are evaluated on a seat belt 21, shown in Fig.2 and 3, of a motor vehicle in a computer-assisted manner. The evaluating device 8 can be a programmable computer or a computer component. The evaluation is carried out in such a manner that restraint functions of a vehicle occupant restraint system of a motor vehicle are regulated or controlled by each evaluation result.

The evaluating device 8 comprises a sensor unit 4, which detects normal driving conditions of the motor vehicle and triggers a preferably electronically designed circuit switching device 3 in such a manner that the measured values relevant for normal driving conditions of the force measuring device 1 are forwarded to a control device 2, for instance to set the contact force felt by a vehicle occupant restrained by the seat belt, as will be described later.

The evaluating device 8 comprises a pre-crash sensor unit 5, with which it determines whether the vehicle is in a pre-crash condition. This type of pre-crash sensor unit is for instance known from DE 100 29 061 A1 or from DE 199 61 799 A1. Sensor signals are evaluated from the pre-crash sensor unit 5, reproducing the driving dynamics and indicating a potential crash.

When the pre-crash sensor unit 5 detects a pre-crash condition the circuit switching device 3 is actuated. The circuit switching device 3 is then open for the force measurement signals of the force measuring device 1 that are transmitted to the control unit 2, which is used for controlling an electric drive 9 operatively connected to a seat belt retractor 10. The force measurement signals are forwarded to control devices 17, 18 for the positioning of seat components in positions suitable for pre-crash conditions. The control devices 17, 18 can be connected to positioning devices12, 13 for the seat base and the seat back. Set value transmitters 14, 15 are activated, which provide predetermined set values for the positioning of the seat base and the seat back depending on the pre-crash condition.

The evaluating device 8 further comprises a sensor unit 6, with which it can be determined whether the vehicle is involved in a crash. To this effect the sensor unit 6 evaluates corresponding sensor signals that provide information about a crash.

In a crash the circuit switching device 3 is actuated by the sensor unit 6 so that the force measurement signals of the force measuring device 1 are forwarded to the corresponding control units for each of the vehicle occupant restraint functions. The force measuring signal of the measuring device 1 is forwarded to a control device 19 for deploying an airbag. To this effect the control device 19 is connected to an airbag inflator 11. The control of the airbag inflator 11 is carried out in dependence on a set value, which is provided by a set value transmitter 16. The set value transmitter 16 is activated by a corresponding signal from the sensor unit 6.

The operation of the restraint system represented in Fig.1 is described below in more detail in the various driving conditions, such as normal driving conditions, pre-crash conditions, and crash conditions.

During normal driving conditions the possibility exists that the measuring signal of the force-measuring device 1 is evaluated together with a signal proportional to a weight force. The signal proportional to the weight force provides information whether the assigned vehicle seat is occupied by a person or by a child seat. From the evaluation of the two signals, the seat occupancy can be determined, as is known for instance from US 6,081,759 A or US 5,996,421 A.

Due to the triggering of the circuit switching device 3 during normal driving conditions, the force signal of the force measuring device 1 is forwarded to the control device 2, which is connected to the electric drive 9. The electric drive 9 is preferably a direct current motor, preferably a collector free direct current motor. A set value transmitter 7 is further set to a predetermined set value for a tensile stress acting upon the seat belt 21 by the sensor unit 4 for normal driving conditions. The set value of this tensile stress can be dependent on the speed of the vehicle. The higher the speed of the vehicle, the higher the set value for the tensile stress acting upon the seat belt 21. The measuring signal of the force measuring device 1 represents the actual value of the tensile stress acting upon the seat belt. The actual value is compared to the set value in the control unit 2 and the electric drive 9 is activated depending on the comparison result. This preferably results in a setting of the belt webbing contact force, with which the seat belt comes into contact with the body of the vehicle occupant affecting comfort during normal driving conditions. This belt webbing contact force can be set, as already mentioned, depending on the vehicle speed. In this case the electric drive 9 can be actuated in addition to the restoring force with which a motive spring of the belt retractor 10 retracts the seat belt. During the withdrawal of the seat belt, i.e. with a pulling force close to or equating zero, the electric drive 9 can be correspondingly actuated for a rapid webbing retraction of the belt retractor 10. The seat belt is thus rapidly brought into its park position.

If the sensor unit 5 identifies a pre-crash condition, the circuit switching device 3 is actuated in such a manner that the measuring signal of the force measuring device 1 is forwarded to the control units 2, 17, 18. The corresponding set value transmitters 7, 14, 15 are activated.

A pulling force required for the pre-tightening of the seat belt can be predetermined as a set value by the set value transmitter 7. The set value is compared in the control unit 2 with the through-connected actual value, the pulling force measured by the force measuring device 1. Depending on the comparison result, the electric drive 9 is actuated, which if applicable transmits a corresponding torque via a coupling to the belt reel of the belt retractor 10, so that to prevent the possibility of belt slackness, the belt webbing is retracted into the belt retractor 10 and the seat belt is loaded with the required tensile stress.

At the same time the seat base and/or the seat back of a seat occupied by a vehicle occupant can be brought into a preferred position for a pre-crash condition. Corresponding position signals are provided as set values by the set value transmitters 14, 15 to the control devices 17, 18. The control devices 17, 18 compare the set values with measured actual positions for the seat base and/or the seat back, whereby depending on the comparison result the alteration devices 12 and/or 13 are correspondingly actuated. The actual positions of the seat bases are measured by a seat base position sensor 36 and the actual positions of the seat back are measured by a seat back position sensor 35. In each case several sensors can be used for this purpose. The regulation or control already mentioned above of the tensile stress acting upon the seat belt is carried out at the same time, as required for the pre-tightening of the seat belt in the pre-crash phase.

If the sensor unit 6 detects a crash, the connection guided from the force measuring device 1 to the control device 2, the connection guided from the seat back position sensor 35 to the control device 18, the connection guided from the seat base position sensor 36 to the control device 17 and the connection guided from an airbag deployment state sensor 37 to the control device 19 are switched to be open by the circuit switching device 3. The set value transmitters 7, 14, 15, 16 are activated. The force measuring device 1 is connected via the circuit switching device 3 to the set value transmitters 7, 16. The force signal measured by the force-measuring device 1 in a crash contains information on the severity of the crash and/or the size or the weight of the vehicle occupant wearing a seatbelt. Depending on this and, if applicable, on further signals containing information on the body weight of the vehicle occupant and/or of the severity of the crash and/or of the position of the vehicle occupant in the vehicle, the set values of the set value transmitters 7, 16 are set. The position set values of the set value transmitters 14, 15 correspond to positions which the seat base and the seat back are to assume in a crash. Due to the seat back position sensor 35 and the seat base position sensor 36, the corresponding actual positions are measured for the seat back and the seat base. The measured values are compared in the control devices 17, 18 with the set values of the set value transmitters 14, 15 and the seat back alteration device 13 and/or the seat base alteration device 12 is actuated correspondingly, so that the seat back and the seat base assume the set positions in a crash.

Depending on the severity of the crash and/or the weight of the seat-belt-wearing vehicle occupant, the set value transmitter 7 indicates a predetermined force path characteristic curve for activating a load limiter integrated in the belt retractor 10. The measuring signal provided by the force measuring device 1 provides the actual size in each case of the pulling force acting upon the seat belt, which is compared with in each case the pulling force value of the predetermined characteristic curve. Depending on the comparison, the electric drive 9, which is connected with the load limiter or the belt reel of the belt retractor 10, is correspondingly actuated, so that the load limiter effect corresponds to the predetermined characteristic curve. The electric drive 9 can in this case work together in a known manner with a load limiter, integrated for instance a torque rod in the belt retractor 10, to achieve the desired characteristic curve.

Signals gained from a detection of the belt reel rotation can be evaluated, as is known from DE 199 02 483. A connection of the electric drive 9 with the belt retractor 10 in the various driving conditions is known from DE 197 31 689 C1.

Depending on the measuring signal of the force measuring device 1 and, if applicable, on the other above-mentioned sensor signals, the inflation pressure can be preset in the set value transmitter 16 as a set value for the inflation of an airbag. By means of the airbag inflation state sensor 37, in each case the actual state of the inflation pressure of the airbag is determined and compared in the control device 19 with the predetermined set value. Depending on the comparison result, the airbag inflator 11 is controlled during the deployment of the airbag.

The control of the deployment of the airbag as well as the extraction of the belt webbing loaded by the load limiter of the seat belt 21 out of the belt retractor 10 can be coordinated together in the evaluating device 8 by combining the control processes in the control devices 2, 19 to achieve an optimal restraint function.

As already mentioned above, an assessment of the severity of the crash can be realized by the measuring signal of the force measuring device 1 by taking into account the body weight of the vehicle occupant. A high force-measuring signal contains information on a serious crash, if the weight of the vehicle occupant is relatively low. A rapid increase in the force-measuring signal indicates a severe crash. In this manner, an early detection of the severity of the crash can be achieved, and the corresponding set values for the characteristic curves of the load limiter can be predetermined in the set value transmitter 7, as well as the inflation in the set value transmitter 16.

Fig.2 and 3 show embodiments for the force-measuring device 1. In the embodiment shown in Fig.2 the force measuring device 1 is located in a belt buckle 26 of the seat belt 21. The belt buckle 26 contains in a housing a belt buckle frame 27 comprising two plates which run essentially parallel to one another and are connected to one another. Between the plates of the frame 27 a not further represented insertion channel is located in a known manner for a buckle tongue 30, with which the seat belt 21 is connected. On the frame 27 a not further represented locking device is arranged in a known manner, with which the buckle tongue is locked with the frame 27 during the insertion of the buckle tongue 30 into the belt buckle.

The frame 27 is movably mounted in a linear manner opposite an anchoring part 29 in the direction of a double arrow 38. To this effect a slot 31 is provided in the anchoring part 29, through which a guide bolt 32, securely connected to the frame 27 extends. The anchoring part 29 is securely connected to the vehicle structure in a known manner by an anchoring cable 28.

The force-measuring device 1 comprises a first sensor part 39 and a second sensor part 40. The first sensor part 39 is moved along with the frame 27. The second sensor part 40 is securely connected to the anchoring part 29. The displacement of the frame affects the pulling force on the seat belt 21, e.g. through forward displacement of the seat-belt-wearing vehicle occupant, is carried out against the force of the two springs 23, 24. In Fig.2 this force acts in the direction of the arrow pointing upwards. The springs can be mechanical springs, for instance coil springs or disk springs, comprising a spring material or by suitably designed spring bodies. In this case a distance A between the guide bolt 32 moving with the frame 27 and the top edge of the slot 31 in the anchoring part 29 is altered. This change in the distance is measured by the force measuring device 1 on the basis of the displacement of the two sensor parts 39, 40 relative to one another. The displacement or change in the distance is proportional to the pulling force on the seat belt 21.

Between the two springs 23, 24 a support plate 25 is located, which is mounted in a displaceable manner opposite the frame 27. The two springs 23, 24 have varying spring constants. The spring constant of the spring 23 is measured in such a manner that, within the effects of pulling forces, it displays for instance up to 100N or slightly higher spring characteristics. The spring constant of the spring 24 is measured in such a manner that in this pulling force region it acts as a rigid body. The pulling forces, which are measured during normal driving conditions or in the pre-crash phase by the force measuring device 1, are preferably located in the measuring region of the spring 23. In this case these are the pulling forces, which are measured during the placing of the seat belt, i.e. during the insertion of the buckle tongue 30 into the belt buckle 36 and, if applicable, the thereto connected seat occupancy detection. These are the forces that occur for the comfort setting of the belt webbing contact force, with which the seat belt comes into contact with the vehicle occupant during normal driving conditions. The forces required for the control of the retensioning force during the pre-tightening in the pre-crash phase are also located in this predetermined measuring region.

The spring constant of the second spring 24 is measured in such a manner that between the pulling force region, in which measurements are made against the forces of the spring 23, and the pulling force region, in which measurements are made against the force of the spring 24, a force of approximately 300 to 400 N occurs. In the force measuring region of the second spring 24, the first spring 23 is pressed on a block so that it acts like a rigid body. The force measuring region of the spring 24 preferably extends between 500 N to 5 kN. In this measuring region forces occurring during a crash are measured by the force measuring device.

In the embodiment shown in Fig.3 the two springs 23, 24 are located between an end fitting 20 fastened to the vehicle structure at an anchoring point 34 for instance by a screw connection and a measuring element 33 that is movably mounted opposite the end fitting 20 in dependence on the pulling force that acts on the seat belt 21. The measuring element 33 is movably mounted on the end fitting 20 in the direction indicated by the double arrow 37 against the force of the two springs 23, 24 in a linear manner. Between the two springs 23, 24 the annular support plate 25 is located, which is movably mounted opposite the end fitting 20 in a linear manner. The measuring element 33 is a piston, the piston rod of which is used for the linear guiding of the two springs 23, 24 and the annular support plate 25. The measuring element can also display another suitable form. The end of the seat belt 21 is secured to the measuring element 33 in a support eyelet 22. With a pulling effect on the seat belt 21 in the direction of the upwardly pointing arrow in Fig.3, the distance A between the two sensor parts 39, 40 is altered as shown in the embodiment of Fig.2. The change in the distance is proportional to the pulling force acting upon the seat belt 21. The change in the distance and thus the pulling force is recorded due to the force measuring device 1 comprising the two sensor parts 39, 40. In this embodiment the sensor part 39 is secured to the measuring element 33 and the sensor part 40 to the end fitting 20.

In the represented embodiments, the measurement of the change in the distance is carried out by known sensor parts. These can be sensor parts 39, 40, in which a magnetic field alteration is carried out, which is recorded by one of the two sensor parts 39, 40 and transformed into an electric signal in a known manner. One of the sensor parts 39, 40 can be a field plate, which on the basis of one of the Hall voltages created during the change in the distance, provides a corresponding electric signal as a force measuring signal. The sensor parts 39, 40 can also be designed so that an alteration in electric capacity, inductivity or resistance, caused by the movement of the measuring element 33, can be recorded by them. For the force measuring device 1, sensor parts 39, 40 can be used which, depending on a change in the distance, provide an electric signal proportional to the change in the distance. As mentioned above, the force measurement is carried out within two force measuring regions, which comprise the spring pre-tensioning of the springs 23, 24.

The two springs 23, 24 in the embodiments of Fig.2 and 3 are arranged in series in the path of the force, which acts between the anchoring point on the motor vehicle and the seat belt 21. Instead of the mechanical coil springs represented in Fig.2 and 3, disk springs or other spring components, for instance rubber springs with corresponding elasticity modules, or suitably designed spring bodies can be used. More than two springs can also be connected in series in the path of the force for the setting of further measuring regions.

## Claims

1. A device for regulating or controlling a restraint system of a motor vehicle comprises: a force measuring device (1) located in a path of a force acting between an means for anchoring a seat belt (21) to the motor vehicle (28, 29; 20, 34) and a subassembly (27, 39; 22, 33) that is movable away from the means for anchoring and is connected to the seat belt, the force measuring device providing measurement signals; an evaluating device (8) that is connected to the force measuring device and evaluates measurement signals provided by the force measuring device (1); and an electric drive (9) that is connected to the evaluating device and is controlled in dependence on the measurement signals of the force measuring device (1), whereby the electric drive (9) is connected to components of a seat belt retractor (10) that is connected to the seat belt (23) in dependence on the force measurement signals as evaluated by the evaluating device to indicate a current vehicle operating condition selected from a normal driving condition, a pre-crash condition or a crash condition,
**characterized in that** at least two springs (23, 24) arranged in series one after the other are provided in the path of the force of the force measuring device (1)

2. The device of claim 1, **characterized in that** the at least two springs (23, 24) are each disposed in a force measuring regions in different driving conditions.

3. The device of claim 1 or 2, **characterized in that** the force measuring regions are separated from one other by a force of about 200 N to about 400 N.

## Patentansprüche

1. Vorrichtung zur Regulierung oder Steuerung eines Rückhaltesystems in einem Kraftfahrzeug, umfassend: eine Kraftmessvorrichtung (1), die sich in einem Weg einer Kraft befindet, die zwischen einem Mittel zur Verankerung eines Sicherheitsgurts (21) an das Kraftfahrzeug (28, 29; 20, 34) und einer Unterbaugruppe (27, 39; 22, 33) wirkt, die vom Verankerungsmittel wegbewegbar ist und mit dem Sicherheitsgurt verbunden ist, die Messsignale bereitstellende Kraftmessvorrichtung, eine Auswertungsvorrichtung (8), die mit der Kraftmessvorrichtung verbunden ist und Messsignale auswertet, die von der Kraftmessvorrichtung (1) bereitgestellt werden; und einen Elektroantrieb (9), der mit der Auswertungsvorrichtung verbunden ist und in Abhängigkeit von den Messsignalen der Kraftmessvorrichtung (1) gesteuert wird, wodurch der Elektroantrieb (9) mit Komponenten eines Sicherheitsgurtaufrollers (10) verbunden ist, der mit dem Sicherheitsgurt (23) in Abhängigkeit von Kraftmesssignalen verbunden ist wie sie von der Auswertungsvorrichtung ausgewertet werden, um einen aktuellen Fahrzeugbetriebszustand anzuzeigen, der aus einem normalen Fahrzustand, einem "Pre-crash"-Zustand oder einem Crash-Zustand ausgewählt wird,
**dadurch gekennzeichnet, dass** mindestens zwei, in Reihe nacheinander angeordneter, Federn (23, 24) im Weg der Kraft der Kraftmessvorrichtung (1) bereitgestellt sind.

2. Vorrichtung nach Anspruch 1, **dadurch gekennzeichnet, dass** die mindestens zwei Federn (23, 24) jeweils in Kraftmessbereichen bei verschiedenen Fahrzuständen angeordnet sind.

3. Vorrichtung nach Anspruch 1 oder 2, **dadurch gekennzeichnet, dass** die Kraftmessbereiche durch eine Kraft von ca. 200 N bis ca. 400 N von einander getrennt sind.

## Revendications

1. Dispositif de réglage ou de contrôle d'un système de retenue d'un véhicule à moteur, comprenant: un dispositif de mesure de la force (1) agencé dans une trajectoire d'une force agissant entre un moyen d'ancrage d'une ceinture de sécurité (21) sur le véhicule à moteur (28, 29; 20, 34) et un sous-assemblage (27, 39; 22, 33) pouvant être déplacé à l'écart du moyen d'ancrage et connecté à la ceinture de sécurité, le dispositif de mesure de la force fournissant des signaux de mesure; un dispositif d'évaluation (8) connecté au dispositif de mesure de la force et évaluant les signaux de mesure fournis par le dispositif de mesure de la force (1); et un dispositif d'entraînement électrique (9) connecté au dispositif d'évaluation et contrôlé en fonction des signaux de mesure du dispositif de mesure de la force (1), le dispositif d'entraînement électrique (9) étant connecté aux composants d'un enrouleur de la ceinture de sécurité (10) connecté à la ceinture de sécurité (23), en fonction des signaux de mesure de la force évalués par le dispositif d'évaluation pour indiquer un état de fonctionnement actuel du véhicule, sélectionné entre un état de roulement normal, un état précédant une collision ou un état de collision, **caractérisé en ce qu'**au moins deux ressorts (23, 24) agencés en série l'un derrière l'autre sont agencés dans la trajectoire de la force du dispositif de mesure de la force (1).

2. Dispositif selon la revendication 1, **caractérisé en ce que** les au moins deux ressorts (23, 24) sont chacun agencés dans des régions de mesure de la force, dans différentes conditions de roulement.

3. Dispositif selon les revendications 1 ou 2, **caractérisé en ce que** les régions de mesure de la force sont séparées l'une de l'autre par une force comprise entre environ 200 N et environ 400 N.
